# EUROPEAN PATENT APPLICATION

(11) **EP 1 065 841 A2**
(43) Date of publication of application: **03.01.2001**
(21) Application number: 00113716.5
(22) Date of filing: 28.06.2000
(51) Int. Cl.: H04L 12/56, H04Q 11/04

(54) **Apparatus and method for assembling and disassembling ATM cells**

(30) Priority: 30.06.1999 JP 18472699
(71) Applicant: MATSUSHITA ELECTRIC INDUSTRIAL CO., LTD., Kadoma-shi, Osaka 571-8501 (JP)
(72) Inventor: Fukui, Akito, Yokohama-shi, Kanagawa 232-0064 (JP)
(74) Representative: Grünecker, Kinkeldey, Stockmair & Schwanhäusser Anwaltssozietät

(57) **Abstract**

ATM cell composition apparatus 100, composition detection sections 101 register a communication starting sequence of transmission terminals 106 in composition sequence table 102, composition buffers 103 stores fixed-speed data input from transmission terminals 106, transmission selection section 104 makes reference to composition sequence table 102 and extracts fixed-speed data from composition buffers 103 according to the communication starting sequence of transmission terminals 106. On the other hand, in ATM cell decomposition apparatus 110, decomposition detection sections 113 register a reception sequence of ATM cells in decomposition sequence table 114, decomposition buffers 115 store the received ATM cells for every reception terminal 117, reception selection section 116 makes reference to decomposition sequence table 114 and extracts the ATM cells from decomposition buffers 115 according to the reception sequence of ATM cells.

## Description

### BACKGROUND OF THE INVENTION

### Field of the Invention

The present invention relates to an apparatus and method for ATM cell composition/decomposition, and more particularly, to an apparatus and method for ATM cell composition/decomposition that converts fixed-speed data to ATM cells.

### Description of the Related Art

ATM (Asynchronous Transfer Mode) is a transfer system capable of transferring data ranging from low-speed data such as voice data to high-speed data such as image data in a consistent manner without depending on voice, image communication services, etc. Transferring such data carried on an ATM network requires the data to be converted (composed/decomposed) into fixed-length ATM cells. An ATM cell composition/decomposition apparatus is used in such a case.

The ITU-T (International Telecommunication Union - Telecommunication Standardization Sector) defines the AAL (ATM Adaptation Layer) specification, which is a protocol for converting various kinds of data into ATM cells, and stipulates that AAL type 1 recommended in I.363 should be used in the case that converting fixed-speed data such as voice data into ATM cells.

In the case that converting fixed-speed data into ATM cells using AAL type 1, an ATM cell composition apparatus on the transmitting side cuts data that are consecutively output from the transmitting terminal at fixed speed for every data length (47 bytes) which equals to the payload of ATM cell using AAL type 1 and adds a header (6 bytes) to the cut data to convert into an ATM cell (53 bytes). On the contrary, an ATM cell decomposition apparatus on the receiving side decomposes an ATM cell into data and a header, restores the data to fixed-speed data and outputs the restored data to a reception terminal.

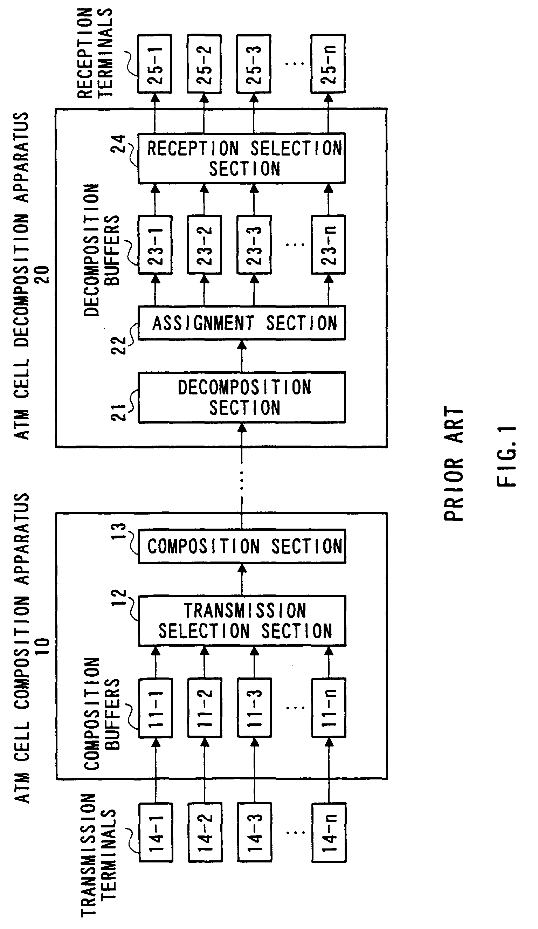

FIG.1 is a main block diagram showing an outlined configuration of a conventional ATM cell composition/decomposition apparatus. In ATM cell composition apparatus 10, composition buffers 11-1 to 11-n are the buffers provided in one-to-one correspondence with transmission terminals 14-1 to 14-n and temporarily store fixed-speed data consecutively output from their respective transmission terminals 14.

Transmission selection section 12 extracts data (hereinafter referred to as "ATM data") for one ATM cell (47 bytes) from composition buffers 11-1 to 11-n in that order and outputs the extracted ATM data to composition section 13.

Composition section 13 adds a header (6 bytes) to the ATM data sequentially output from transmission selection section 12, converts them to ATM cells and transmits these ATM cells.

On the other hand, in ATM cell decomposition apparatus 20, decomposition section 21 decomposes each received ATM cell into ATM data and a header and outputs these ATM data and header to assignment section 22.

Assignment section 22 assigns and outputs the ATM data to decomposition buffers 23-1 to 23-n based on the header information.

Decomposition buffers 23 are the buffers provided in one-to-one correspondence with reception terminals 25-1 to 25-n to absorb CDV (Cell Delay Variation) that occur during ATM cell transfers and temporarily store the ATM data output from assignment section 22 addressed to reception terminals 25.

Reception selection section 24 extracts the ATM data from decomposition buffers 23-1 to 23-n in that order, restores the ATM data to fixed-speed data and outputs the fixed-speed data to reception terminals 25.

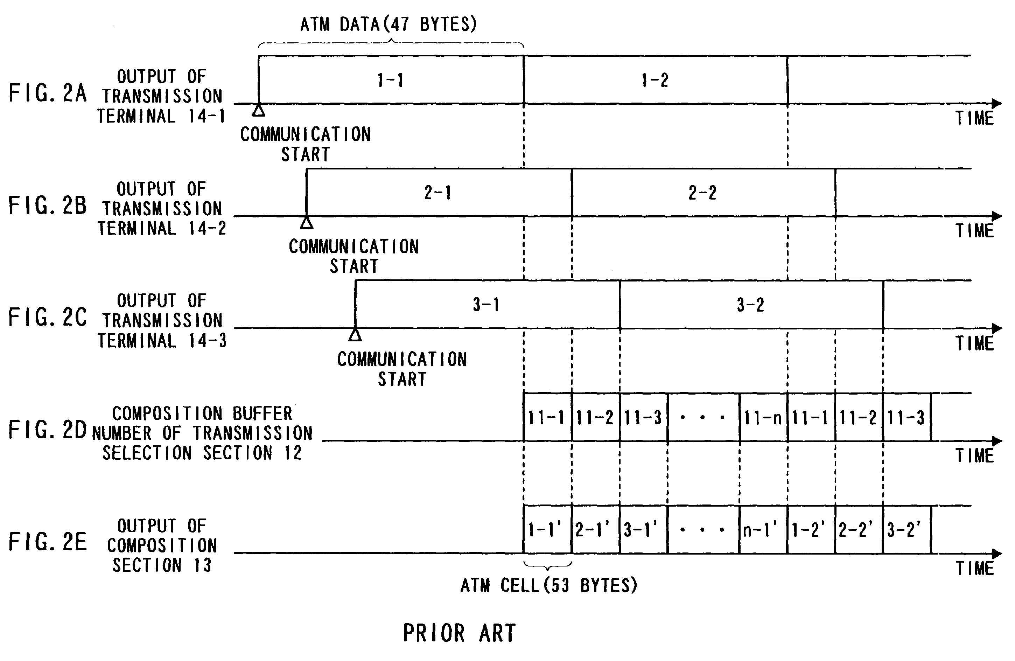

Next, the operation of the ATM cell composition apparatus with the configuration above will be explained using FIG.2A to FIG.2E. FIG.2A to FIG.2E are signal timing charts to explain the operation of the conventional ATM cell composition apparatus.

As shown in FIG.2A to FIG.2C, transmission terminals 14-1 to 14-n start communication one by one and consecutively output fixed-length data to composition buffers 11-1 to 11-n.

As shown in FIG.2D, in transmission selection section 12, the processing order of composition buffers 11-1 to 11-n are preset in order from 11-1 to 11-n. When ATM data 1-1 is stored in composition buffers 11-1, transmission selection section 12 extracts ATM data 1-1 from composition buffers 11-1 and outputs ATM data 1-1 to composition section 13.

Composition section 13 adds a header to ATM data 1-1 to compose it into ATM cell 1-1' and transmits ATM cell 1-1' as shown in FIG.2E.

That is, ATM data 1-1 shown in FIG.2A is converted into ATM cell 1-1' shown in FIG.2E at timing 11-1 shown in FIG.2D. Then, ATM data 2-1 shown in FIG.2B is converted into ATM cell 2-1' shown in FIG.2E at timing 11-2 shown in FIG.2D. Then, ATM data 3-1 shown in FIG.2C is converted into ATM cell 3-1' shown in FIG.2E at timing 11-3 shown in FIG.2D. The rest of ATM data are converted into ATM cells in a like manner.

However, the conventional ATM cell composition apparatus has the following problem. That is, in transmission selection section 12, the processing order of composition buffers 11-1 to 11-n are preset in that order.

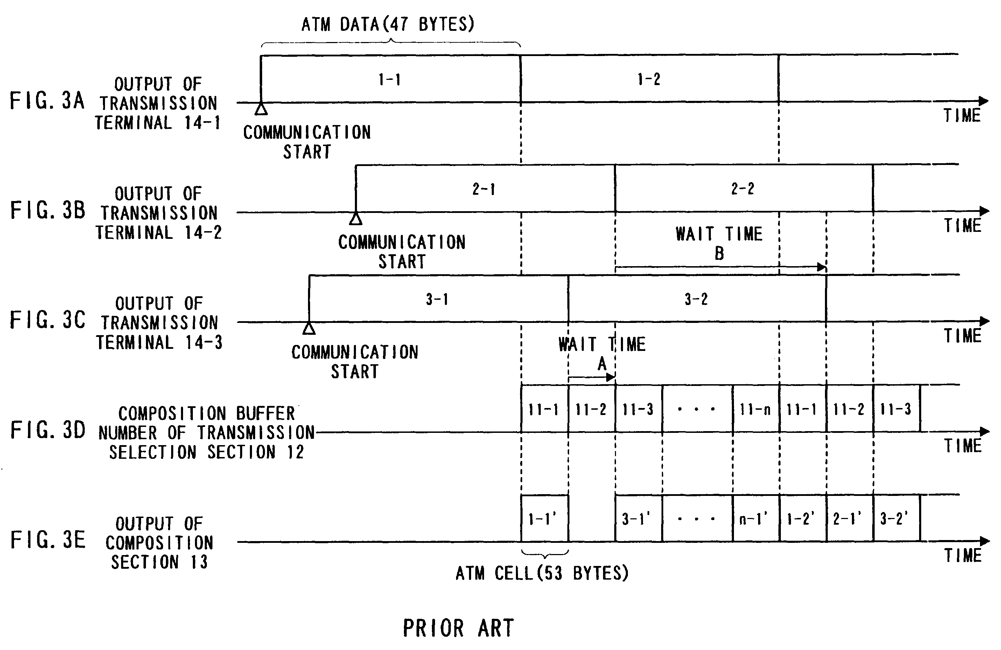

In the case that, for example, transmission terminals 14-1 to 14-3 start communications in order of 14-1→14-3→14-2 as shown in FIG.3A to FIG.3C, the communication starting sequence will differ from the sequence of composition buffers 11 preset in transmission selection section 12 shown in FIG.3D, that is, 11-1→11-2→11-3.

With this difference, when ATM data 3-1 shown in FIG.3C is stored in composition buffer 11-3, timing 11-3 shown in FIG.3D has not been reached. Thus, a wait time A is added after ATM data 3-1 is stored in composition buffer 11-3 until timing 11-3 at which ATM data 3-1 is converted into ATM cell 3-1' shown in FIG.3E, during which ATM data 3-1 remains stored in composition buffer 11-3.

Furthermore, regarding ATM data 2-1 shown in Fig.3B, when ATM data 2-1 is stored in composition buffer 11-2, the initial timing of 11-2 shown in FIG.3D has already passed. Thus, a wait time B is added after ATM data 2-1 is stored in composition buffer 11-2 until next timing 11-2 at which ATM data 2-1 Is converted into ATM cell 2-1' shown in FIG.3E, during which ATM data 2-1 remains stored in composition buffer 11-2.

As shown above, adding wait times such as wait time A and wait time B will increase a delay time and produce idle times in ATM cell transfers, and thus reduce the efficiency of ATM cell transfers as well.

### SUMMARY OF THE INVENTION

It is an object of the present invention to provide an apparatus and method for ATM cell composition/decomposition not only preventing an increase of a delay time caused by a wait time but also preventing reduction of the efficiency of ATM cell transfers.

The present inventor noted that the wait time described above is attributable to the fact that data are converted into

ATM cells in a preset, fixed sequence not following a communication starting sequence of transmission terminals. In order to attain the above object, the present invention makes it possible to convert data into ATM cells according to the communication starting sequence of transmission terminals.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a main block diagram showing an outlined configuration of a conventional ATM cell composition/decomposition apparatus;
FIG.2A is a signal timing chart to explain the operation of the conventional ATM cell composition apparatus;
FIG.2B is a signal timing chart to explain the operation of the conventional ATM cell composition apparatus;
FIG.2C is a signal timing chart to explain the operation of the conventional ATM cell composition apparatus;
FIG.2D is a signal timing chart to explain the operation of the conventional ATM cell composition apparatus;
FIG.2E is a signal timing chart to explain the operation of the conventional ATM cell composition apparatus;
FIG.3A is other signal timing chart to explain the operation of the conventional ATM cell composition apparatus;
FIG.3B is other signal timing chart to explain the operation of the conventional ATM cell composition apparatus;
FIG.3C is other signal timing chart to explain the operation of the conventional ATM cell composition apparatus;
FIG.3D is other signal timing chart to explain the operation of the conventional ATM cell composition apparatus;
FIG.3E is other signal timing chart to explain the operation of the conventional ATM cell composition apparatus;
FIG.4 is a main block diagram showing an outlined configuration of an ATM cell composition/decomposition apparatus according to an embodiment of the present invention;
FIG.5A is a signal timing chart to explain the operation of the ATM cell composition apparatus according to the embodiment of the present invention;
FIG.5B is a signal timing chart to explain the operation of the ATM cell composition apparatus according to the embodiment of the present invention;
FIG.5C is a signal timing chart to explain the operation of the ATM cell composition apparatus according to the embodiment of the present invention;
FIG.5D is a signal timing chart to explain the operation of the ATM cell composition apparatus according to the embodiment of the present invention;
FIG.5E is a signal timing chart to explain the operation of the ATM cell composition apparatus according to the embodiment of the present invention;
FIG.6A is other signal timing chart to explain the operation of the ATM cell decomposition apparatus according to the embodiment of the present invention;
FIG.6B is other signal timing chart to explain the operation of the ATM cell decomposition apparatus according to the embodiment of the present invention;
FIG.6C is other signal timing chart to explain the operation of the ATM cell decomposition apparatus according to the embodiment of the present invention;
FIG.6D is other signal timing chart to explain the operation of the ATM cell decomposition apparatus according to the embodiment of the present invention;
FIG.6E is other signal timing chart to explain the operation of the ATM cell decomposition apparatus according to the embodiment of the present invention;
FIG.6F is other signal timing chart to explain the operation of the ATM cell decomposition apparatus according to the embodiment of the present invention; and
FIG.6G is other signal timing chart to explain the operation of the ATM cell decomposition apparatus according to the embodiment of the present invention.

### DETAILED DESCRIPTION OF THE PREFERRED EMBODIMENTS

With reference now to the attached drawings, an embodiment of the present invention will be explained in detail below.

### (Embodiment)

The ATM cell composition/decomposition apparatus according to an embodiment of the present invention registers buffer numbers to be selected in a table according to a communication starting sequence of transmission terminals so that conversion between fixed-speed data and ATM cells is carried out according to the communication starting sequence of the transmission terminals.

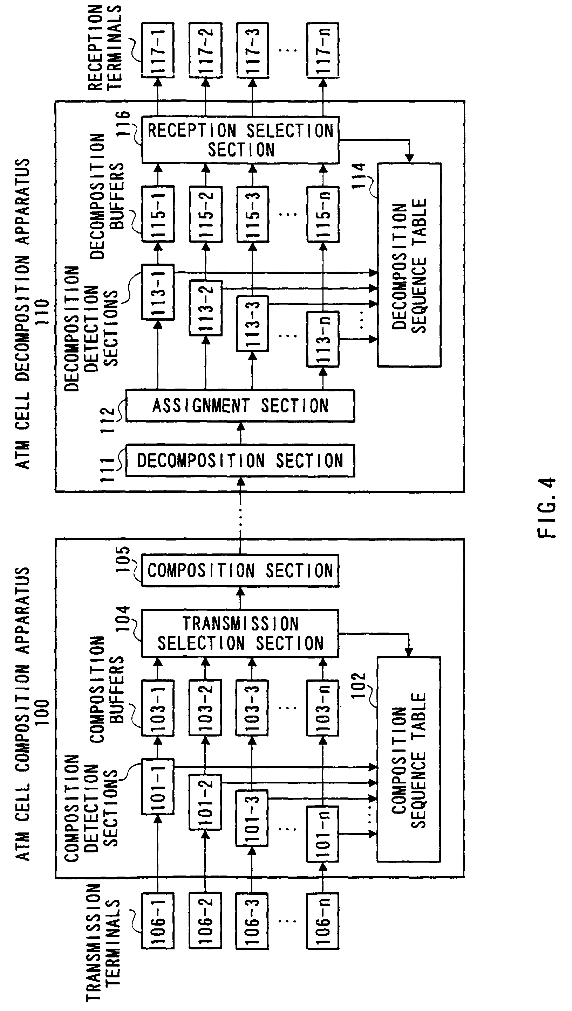

The ATM cell composition/decomposition apparatus according to an embodiment of the present invention will be explained below. FIG.4 is a main block diagram showing an outlined configuration of the ATM cell composition/decomposition apparatus according to an embodiment of the present invention.

In ATM cell composition apparatus 100, composition detection sections 101-1 to 101-n are provided in one-to-one correspondence with transmission terminals 106-1 to 106-n and detect that the start of fixed-speed data consecutively output from transmission terminals 106 has arrived at composition detection sections 101-1 to 101-n.

Composition buffers 103-1 to 103-n are the buffers provided in one-to-one correspondence with transmission terminals 106-1 to 106-n and temporarily store the fixed-speed data consecutively output from transmission terminals 106-1 to 106-n.

Composition sequence table 102 is a table to be registered the order in which transmission terminals 106 output fixed-speed data to their respective composition buffers 103-1 to 103-n for the first time after a communication is started, as numbers 103-1 to 103-n of composition buffers 103. That is, the processing order of composition buffers 103-1 to 103-n are registered according to the communication starting sequence of transmission terminals 106 in composition sequence table 102.

Transmission selection section 104 extracts ATM data from composition buffers 103 in the order registered in composition sequence table 102 and outputs the ATM data to composition section 105.

Composition section 105 adds a header to the ATM data sequentially output from transmission selection section 104, composes this into an ATM cell and transmits the ATM cell.

On the other hand, in ATM cell decomposition apparatus 110, decomposition section 111 decomposes the received ATM cell into ATM data and a header and outputs the ATM data and header to assignment section 112.

Assignment section 112 assigns and outputs the ATM data to decomposition buffers 115-1 to 115-n based on the header information.

Decomposition detection sections 113-1 to 113-n are provided in one-to-one correspondence with reception terminals 117-1 to 117-n and detect that the ATM data are output from assignment section 112 to decomposition buffers 115.

Decomposition buffers 115-1 to 115-n are the buffers provided in one-to-one correspondence with reception terminals 117-1 to 117-n to absorb CDV that occur during ATM cell transfers and temporarily store ATM data output from decomposition detection section 113-1 to 113-n.

Decomposition sequence table 114 is a table to be registered the order in which assignment section 112 has output ATM data.

Reception selection section 116 extracts the ATM data from their respective decomposition buffers 115 in the order registered in decomposition sequence table 114, restores the ATM data to fixed-speed data and outputs the fixed-speed data to their respective reception terminals 117.

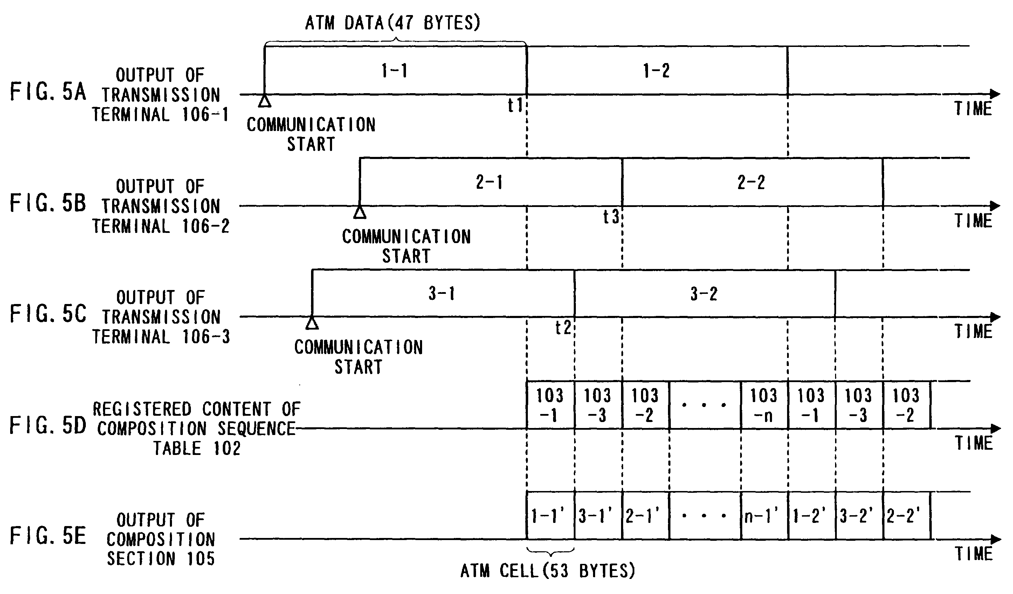

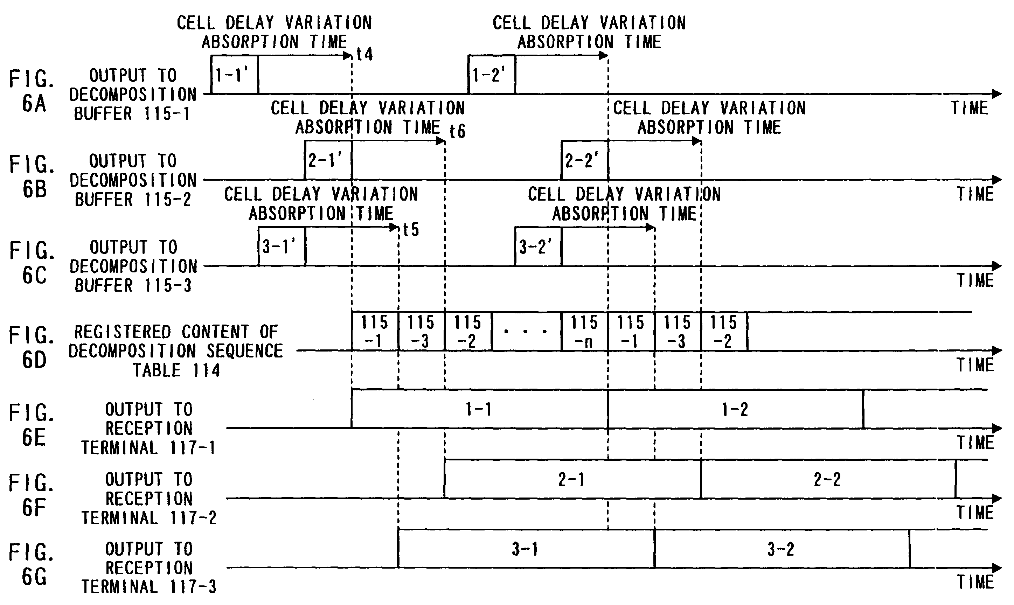

Next, the operation of the ATM cell composition/decomposition apparatus with the above configuration will be explained using FIG.5A to FIG.5E and FIG.6A to FIG.6G. Here, for convenience of explanation, the following explanation will be centered on three transmission terminals 106-1 to 106-3 and three composition buffers 103-1 to 103-3 corresponding to those transmission terminals, and three reception terminals 117-1 to 117-3 and three decomposition buffers 115-1 to 115-3 corresponding to those reception terminals. Suppose transmission terminals 106-1 to 106-3 will start their communications in order of 106-1→106-3 →106-2.

First, the operation of ATM cell composition apparatus 100 will be explained using FIG.5A to FIG.5E. As shown in FIG.5A to FIG.5C, transmission terminals 106-1 to 106-3 start their communications in order of 106-1→106-3→106-2 and consecutively output fixed-length data to ATM cell composition apparatus 100.

When the start of the fixed-length data arrives at their respective composition detection sections 101, composition detection sections 101 detect its arrival and output the numbers of composition buffers 103 provided in one-to-one correspondence with transmission terminals 106 to composition sequence table 102 as detection signals.

Upon reception of the above detection signals, composition sequence table 102 registers the numbers of composition buffers 103 in the table so that the fixed-length data are converted into ATM cells at the timing at which the ATM data are stored in their respective composition buffers 103.

More specifically, when the start of ATM data 1-1 shown in FIG.5A arrives at composition detection section 101-1, the above detection signal is output from composition detection section 101-1 to composition sequence table 102, and 103-1, the number indicating composition buffer 103-1, is registered in composition sequence table 102 as shown in FIG.5D so that ATM data 1-1 is converted into ATM cell 1-1' at timing t1 at which ATM data 1-1 is stored in composition buffer 103-1.

Next, for ATM data 3-1 and ATM data 2-1, like ATM data 1-1, 103-3, the number indicating composition buffer 103-3, and 103-2, the number indicating composition buffer 103-2, are registered in composition sequence table 102 as shown in FIG.5D.

As a result, as shown in FIG.5D, 103-1→103-3→103-2... →103-n, the numbers of composition buffers 103 corresponding to their respective transmission terminals 106 are registered in composition sequence table 102 according to the communication starting sequence of their respective transmission terminals 106-1→106-3→106-2...→106-n.

Since the data output from transmission terminals 106 are fixed-speed data, and the period during which the ATM data is stored in their respective composition buffer 103 is constant. Therefore, once the numbers of composition buffers 103 are registered in composition sequence table 102, there will be no further need to register them. That is, the registered content of composition sequence table 102 can be used repeatedly. For example, in the case that data with a fixed speed of 64 kbps are converted into ATM cells using AAL type 1, the period is 5.875 ms.

Next, when the ATM data are stored in composition buffers 103, transmission selection section 104 extracts the ATM data in the order registered in composition sequence table 102 and outputs the ATM data to composition section 105 one by one.

More specifically, at timing t1 at which ATM data 1-1 shown in FIG.5A is stored in composition buffer 103-1, transmission selection section 104 makes reference to composition buffer number 103-1 registered in composition sequence table 102 shown in FIG.5D and outputs ATM data 1-1 to composition section 105 according to the number.

Then, for ATM data 3-1 shown in FIG.5C, at timing t2, transmission selection section 104 increments the reference item in composition sequence table 102 shown in FIG.5D by 1, makes reference to composition buffer number 103-3 and outputs ATM data 3-1 to composition section 105 according to the number 103-3.

Then, for ATM data 2-1 shown in FIG.5B, at timing t3, transmission selection section 104 increments the reference item in composition sequence table 102 shown in FIG.5D by 1, makes reference to composition buffer number 103-2 and outputs ATM data 2-1 to composition section 105 according to the number 103-2.

Then, composition section 105 adds a header to the ATM data sequentially output from transmission selection section 104 , composes ATM cells 1-1', 3-1', 2-1'... and sends the ATM cells one by one as shown in FIG.5E.

Next, the operation of ATM cell decomposition apparatus 110 will be explained using FIG.6A to FIG.6G. When ATM cells 1-1', 3-1' and 2-1' arrive at ATM cell decomposition apparatus 110 one by one and are input to decomposition section 111, decomposition section 111 decomposes the received ATM cells into ATM data and a header and outputs the ATM data and header to assignment section 112.

Then, as shown in FIG.6A to FIG.6C, assignment section 112 assigns ATM data 1-1', 3-1' and 2-1' to decomposition buffers 115-1, 115-3 and 115-2 one by one and outputs them based on the header information.

On this occasion, decomposition detection sections 113-1, 113-3 and 113-2 detect that the ATM data are output from assignment section 112 to decomposition buffers 115-1, 115-3 and 115-2 and output the numbers of decomposition buffers 115 corresponding to their respective reception terminals 117 to decomposition sequence table 114 as detection signals.

Upon reception of the above detection signals, decomposition sequence table 114 registers the numbers of decomposition buffers 115 to which ATM data are output at which a CDV absorption time has elapsed after the ATM data are output to their respective decomposition buffers 115.

More specifically, when ATM data 1-1' shown in FIG.6A is output to decomposition buffer 115-1, the above detection signal is output from decomposition detection section 113-1 to decomposition sequence table 114. Then, 115-1, the number indicating decomposition buffer 115-1, is registered in decomposition sequence table 114 as shown in FIG.6D so that ATM data 1-1' is restored to fixed-speed data 1-1 shown in FIG.6E at timing t4 at which a CDV absorption time has elapsed after ATM data 1-1' is output to decomposition buffer 115-1.

Then, for ATM data 3-1' and ATM data 2-1', like ATM data 1-1', 115-3, the number indicating decomposition buffer 115-3, and 115-2, the number indicating decomposition buffer 115-2 are registered one by one in decomposition sequence table 114 as shown in FIG.6D.

As a result, as shown in FIG.6D, 115-1→115-3→115-2... → 115-n, the numbers corresponding to their respective decomposition buffers 115 are registered one by one in decomposition sequence table 114 in the order in which ATM data are output to decomposition buffers 115.

Since the data restored by reception selection section 116 are fixed-speed data, and the period during which the ATM data is restored to the fixed-speed data is constant. Therefore, once the numbers of decomposition buffers 115 are registered in decomposition sequence table 114, there will be no further need to register them. That is, the registered content of decomposition sequence table 114 can be used repeatedly. For example, in the case that data are restored to data with a fixed speed of 64 kbps, the period is 5.875 ms.

Then, when a CDV absorption time has elapsed after the ATM data are stored in decomposition buffers 115, reception selection section 116 extracts the ATM data from decomposition buffers 115 in the order registered in decomposition sequence table 114, restores the ATM data to fixed-speed data and outputs the fixed-speed data to reception terminals 117.

More specifically, at timing t4 at which CDV absorption time has elapsed after ATM data 1-1' shown in FIG.6A is stored in decomposition buffer 115-1, reception selection section 116 makes reference to decomposition buffer number 115-1 registered in decomposition sequence table 114 shown in FIG.6D, extracts ATM data 1-1' from decomposition buffer 115-1 according to the number 115-1, restores ATM data 1-1' to fixed-speed data 1-1 shown in FIG.6E and outputs fixed-speed data 1-1 to reception terminal 117-1.

Then, for ATM data 3-1' shown in FIG.6C, at timing t5, reception selection section 116 increments the reference item in decomposition sequence table 114 shown in FIG.6D by 1, makes reference to decomposition buffer number 115-3, restores ATM data 3-1' to fixed-speed data 3-1 shown FIG.6G according to the number 115-3 and outputs fixed-speed data 3-1 to reception terminal 117-3.

Then, for ATM data 2-1' shown in FIG.6B, at timing t6, reception selection section 116 increments the reference item in decomposition sequence table 114 shown in FIG.6D by 1, makes reference to decomposition buffer number 115-2, restores ATM data 2-1' to fixed-speed data 2-1 shown in FIG.6F according to the number 115-2 and outputs fixed-speed data 2-1 to reception terminal 117-2.

This embodiment has a configuration with a plurality of composition detection sections in one-to-one correspondence with transmission terminals and a plurality of decomposition detection sections in one-to-one correspondence with reception terminals. However, it is also possible to have a configuration with one composition detection section detecting the communication starting sequence of transmission terminals and one decomposition detection section detecting the reception sequence of ATM cells. Furthermore, it is not particularly necessary to provide a composition detection section and decomposition detection section if at least the communication starting sequence of transmission terminals and the reception sequence of ATM cells can be identified.

Thus, the ATM cell composition/decomposition apparatus according to this embodiment registers buffer numbers to be selected in a table according to the communication starting sequence of transmission terminals so that conversion between fixed-speed data and ATM cells is carried out according to the communication starting sequence of transmission terminals, making it possible to prevent a delay time caused by a wait time from increasing and prevent the ATM cell transfer efficiency from reducing.

The ATM cell composition/decomposition apparatus according to the above embodiment is applicable to an ATM switching apparatus.

As described above, the present invention can prevent a delay time caused by a wait time from increasing and prevent the ATM cell transfer efficiency from reducing.

The present invention is not limited to the above described embodiments, and various variations and modifications may be possible without departing from the scope of the present invention.

This application is based on the Japanese Patent Application No.HEI 11-184726 filed on June 30, 1999, entire content of which is expressly incorporated by reference herein.

## Claims

1. An ATM cell composition apparatus comprising:
a detector(101-1 to 101-n) that detects a communication starting sequence of a plurality of transmission terminals;
a composition sequence table(102) that registers the communication starting sequence according to the detection result;
a storage device(103-1 to 103-n) that stores fixed-speed data consecutively output by the plurality of transmission terminals; and
a converter(104) that sequentially converts the fixed-speed data stored in the storage device to ATM cells one by one according to the communication starting sequence.

2. The ATM cell composition apparatus according to claim 1, comprising a plurality of storage devices(103-1 to 103-n) to store data for every transmission terminal, wherein
the detector(101-1 to 101-n) notifies the identification numbers of the storage devices to the composition sequence table when the start of fixed-speed data consecutively output by a plurality of transmission terminals arrives at the detector for the first time after communications of the plurality of transmission terminals are started,
the composition sequence table(102) registers the identification numbers in the table one by one,
the converter(104) converts the fixed-speed data stored in the storage devices to ATM cells in order in which the identification numbers are registered in the composition sequence table.

3. An ATM cell decomposition apparatus comprising:
a detector(113-1 to 113-n) that detects a reception sequence of ATM cells;
a decomposition sequence table(114) that registers the reception sequence according to the detection result;
a storage device(115-1 to 115-n) that stores the ATM cells; and
a converter(116) that sequentially converts the ATM cells stored in the storage device to fixed-speed data one by
one according to the reception sequence.

4. The ATM cell decomposition apparatus according to claim 3, comprising a plurality of storage devices(115-1 to 115-n) to store ATM cells for every reception terminal, wherein
the detector(113-1 to 113-n) notifies the identification numbers of the storage devices to the decomposition sequence table when ATM cells pass through the detector,
the decomposition sequence table(114) registers the identification numbers in the table one by one,
the converter(116) converts the ATM cells stored in the storage devices to fixed-speed data in order in which the identification numbers are registered in the decomposition sequence table.

5. An ATM switching apparatus having an ATM cell composition apparatus, the ATM cell composition apparatus comprising:
a detector(101-1 to 101-n) that detects a communication starting sequence of a plurality of transmission terminals;
a composition sequence table(102) that registers the communication starting sequence according to the detection result;
a storage device(103-1 to 103-n) that stores fixed-speed data consecutively output by the plurality of transmission terminals; and
a converter(104) that sequentially converts the fixed-speed data stored in the storage device to ATM cells one by one according to the communication starting sequence.

6. An ATM switching apparatus having an ATM cell decomposition apparatus, the ATM cell decomposition apparatus comprising:
a detector(113-1 to 113-n) that detects a reception sequence of ATM cells;
a decomposition sequence table(114) that registers the reception sequence according to the detection result;
a storage device(115-1 to 115-n) that stores the ATM cells; and
a converter(116) that sequentially converts the ATM
cells stored in the storage device to fixed-speed data one by one according to the reception sequence.

7. An ATM cell composing method comprising the steps of:
detecting a communication starting sequence of a plurality of transmission terminals; and
converting fixed-speed data output by the plurality of transmission terminals to ATM cells according to the communication starting sequence.

8. An ATM cell decomposing method comprising the steps of:
detecting a reception sequence of ATM cells; and
converting the ATM cells to fixed-speed data according to the reception sequence.
